# NEUE EUROPÄISCHE PATENTSCHRIFT

(11) **EP 0 802 104 B2**
(45) Veröffentlichungstag und Bekanntmachung des Hinweises auf die Entscheidung über den Einspruch: **25.10.2006**
(45) Hinweis auf die Patenterteilung: 27.06.2001
(21) Anmeldenummer: 97105348.3
(22) Anmeldetag: 29.03.1997
(51) Int. Cl.: B62D 1/18

(54) **Lenksäule für Kraftfahrzeuge**
Steering column for motor vehicles
Colonne de direction pour véhicules à moteur

(30) Priorität: 18.04.1996 AT 70296
(43) Veröffentlichungstag der Anmeldung: 22.10.1997
(73) Patentinhaber: ETABLISSEMENT SUPERVIS, FL-9490 Vaduz (LI)
(72) Erfinder: Lutz, Christian, Ing., 6714 Nüziders (AT)
(74) Vertreter: Hefel, Herbert

(56) Entgegenhaltungen:
- EP-A- 0 121 506
- EP-A- 0 600 700
- EP-A- 0 671 308
- EP-B- 0 019 571
- EP-B- 0 121 506
- WO-A1-91/06461
- WO-A1-97/16337
- DE-A- 1 780 061
- DE-A- 4 016 163
- DE-C- 1 780 061
- DE-T- 68 914 999
- FR-A- 2 360 454
- GB-A- 2 033 855
- GB-A- 2 092 966
- JP-A- 5 019 124
- JP-U- 260 073
- JP-U- 2 124 763
- JP-Y- 26 219 483
- US-A- 4 554 843
- US-A- 5 131 287
- US-A- 5 503 431

## Beschreibung

Die Erfindung bezieht sich auf eine Lenksäule für Kraftfahrzeuge mit einem an einem Karosserieteil festlegbaren Montageteil, zwischen dessen Schenkeln ein die Lenkspindel aufnehmendes Mantelrohr liegt nach den Merkmalen des Oberbegriffes des Patentanspruches 1

Im modernen Kraftfahrzeugbau sind die Lenksäulen so ausgebildet und gelagert, daß das endseitig an der Lenksäule festgelegte Lenkrad verstellbar ist, entweder in der Höhe oder in der Entfernung zum Lenker oder auch beide Einstellungsmöglichkeiten aufweist. Dies setzt eine verschiebbare oder verschwenkbare Lagerung der die Lenksäule bildenden Teile voraus, wobei darüberhinaus Klemm- und Spannglieder vorgesehen werden müssen, die diese Verschiebbarkeit sichern, zuverlässig und auf Dauer blockieren, andererseits aber diese Spann- und Klemmglieder leicht betätigbar sein müssen, um im Bedarfsfall das Lenkrad in die gewünschte Stellung zu bringen und in dieser Stellung dann auch verläßlich festzuhalten. Beispiele dafür zeigen und beschreiben die DE-A-44 00 306, DE-A-40 16 163 A1 sowie die EP-A-0 600 700.

Auch die Konstruktion nach der EP-A-0 671 308 ist zu erwähnen: Zwischen den beiden Schenkeln eines Montageteiles liegt ein Gehäuse der Lenksäule, das Gabelform aufweist. An den Gabelenden sind Langlochaussparungen, die von einem Bolzen durchsetzt sind, der mit seinen beiden Enden an den Schenkeln des Montageteiles festgelegt ist. Auf der Innenseite der Gabel sind Federscheiben beidseitig angeordnet, die vom erwähnten Bolzen durchsetzt sind. Ferner sind zwischen diesen Federscheiben der beiden Seiten auf dem Bolzen frei axial beweglich zylinderförmige Druckglieder, zwischen welchen ein um die Achse des Bolzens verdrehbares Spannglied gelagert ist, mit welchen die zylinderförmigen Druckglieder nach außen gegen die Federscheiben drückbar sind. Diese Konstruktion erscheint nicht zweckmäßig, da sie mit aufwendiger Montagearbeit verbunden ist, bedingt durch die Lage der für das Verspannen erforderlichen Teile zwischen den Gabelenden des Gehäuses der Lenksäule.

Vor allem ist hier aber die Konstruktion nach der GB-A-2 092 966 zu erwähnen die eine gattungsgemäße Lenksäule, mit den Merkmalen des Oberbegriffs des Anspruchs 1 zeigt und beschreibt.

Ausgehend von dieser vorbekannten Konstruktion zielt die Erfindung darauf ab, eine zweckmäßige und montagefreundliche Lenksäule so auszubilden, daß sie sowohl in Längs- wie auch in Querrichtung in weitem Bereich verstellbar ist.

Die Erfindung ist für die Lösung dieser Aufgabe gekennzeichnet durch die Merkmale des kennzeichnenden Teiles des Patentanspruches 1. Zweckmäßige Ausgestaltungen der Erfindung sind in den Unteransprüchen festgehalten.

Ohne die Erfindung einzuschränken, wird anhand der Zeichnung ein Ausführungsbeispiel näher erläutert. Es zeigen:
- Fig.1: die Lenksäule von der Seite gesehen;
- Fig. 2: die Lenksäule nach Fig. 1 von oben gesehen;
- Fig. 3: die Lenksäule nach Fig. 1 von der Stirnseite her gesehen - Blickrichtung Pfeil A in Fig. 1;
- Fig. 4: die am Lamellenpaket anliegende Seite einer Druckplatte und
- Fig. 5: deren Seitensicht;
- Fig. 6: eine Lamelle des am Mantelrohr vorgesehenen Lamellenpaketes und
- Fig. 7: dessen Querschnitt - Schnittlinie VII - VII in Fig. 6;
- Fig. 8: eine Lamelle des am Montageteil festgelegten Lamellenpaketes.

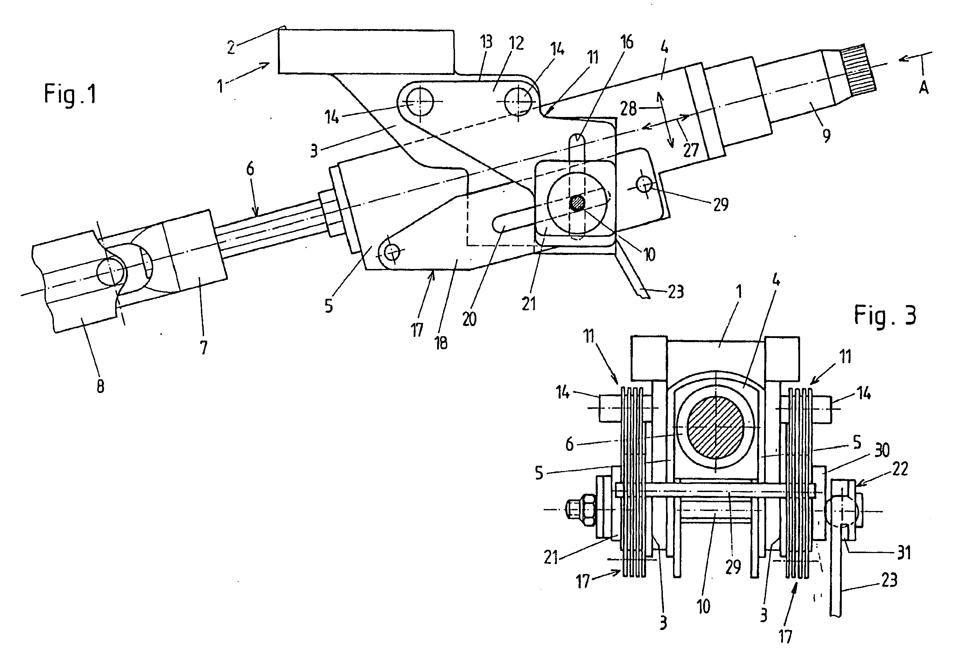

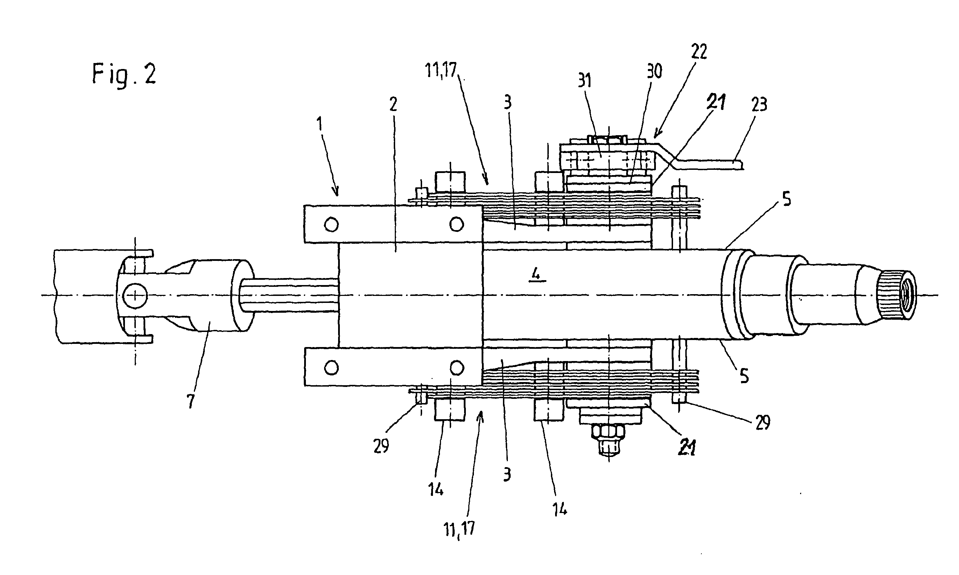

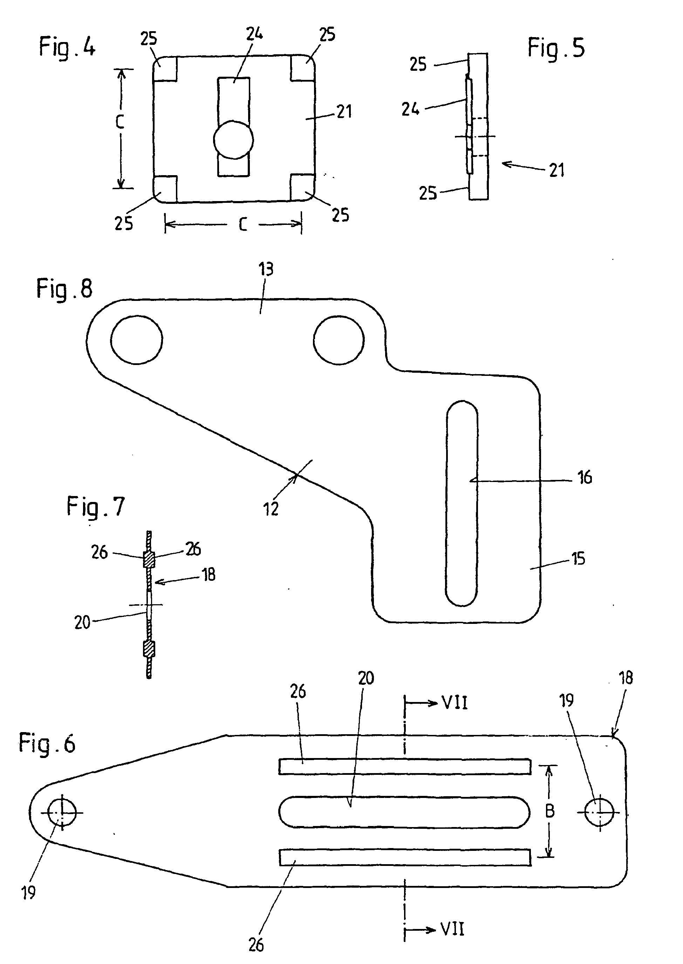

Die Lenksäule nach den Fig. 1 bis 3 weist einen U-förmigen Montageteil 1 (Konsole) auf, der mit seiner planen Oberseite an einem hier nicht dargestellten Karosserieteil eines Kraftfahrzeuges festgelegt ist, und zwar zweckmäßigerweise so, daß er im Crashfall in der Zeichenebene (Fig. 1) verschiebbar ist. Da diese Lagerung nicht Gegenstand der Erfindung ist, wird sie im folgenden auch nicht näher erörtert. Die vertikalen Schenkel 3 dieses U-förmigen Montageteiles 1 (Konsole) sind nach unten gerichtet, wobei diese Schenkel 3 so ausgebildet sind, daß der Montageteil 1 sowohl in Draufsicht (Blickrichtung rechtwinkelig zur Oberseite 2 - Fig. 2) wie auch in Ansicht (Fig. 3) eine U-Form zeigt. Dabei ist die Erstreckung der Schenkel 3 parallel zur Oberseite 2 des Montageteiles 1 größer als die Erstreckung rechtwinkelig dazu.

Zwischen den beiden Schenkeln 3 des Montageteiles 1 liegt ein Mantelrohr 4 mit planen parallelen Seitenflanken 5 (Fig. 3). In diesem Mantelrohr 4 ist die Lenkspindel 6 aufgenommen, die teleskopartig ausgebildet ist und die aus einem im Mantelrohr 4 festgelegten rohrartigen Teil und einem gegenüber diesem rohrartigen Teil axial verschiebbaren Schaft 7 besteht. Dieser Schaft 7 ist an seinem Ende über ein nicht näher bezeichnetes Kardangelenk 8 mit dem Lenkgetriebe verbunden. Das andere Ende 9 der Lenkspindel 6 trägt das nicht dargestellte Lenkrad.

In den Seitenflanken 5 des Mantelrohres 4, und zwar unterhalb der Lenkspindel 6, sind paarweise vorgesehene Langlochausnehmungen ausgespart, die sich parallel zur Längsachse des Mantelrohres 4 erstrecken, diese Langlochausnehmungen sind jedoch in den Figuren nicht sichtbar. Durch diese Langlochausnehmungen erstreckt sich quer zur Längsachse des Mantelrohres 4 ein Spannbolzen 10, der die Schenkel 3 des Montageteiles 1 beidseitig überragt.

An den Außenseiten der vertikalen Schenkel 3 sind nun mehrere, deckungsgleich geformte und voneinander distanzierte, ein Lamellenpaket 11 bildende Lamellen 12 angeordnet. Diese Lamellen 12 sind sozusagen fliegend gelagert, indem sie nur an einer ihrer Seiten 13 mit dem Montageteil 1 über Haltebolzen 14 verbunden sind. Im fliegend gelagerten Abschnitt 15 dieser Lamellen 12 ist ein vertikales Langloch 16 ausgespart (Fig. 8).

Ein zweites Lamellenpaket 17 aus im wesentlichen rechteckförmigen Lamellen 18 ist an seinen beiden Enden 19 an der Seitenflanke 5 des Mantelrohres festgelegt. Diese Enden 19 der rechteckförmigen Lamellen (Fig. 6) sind von Bolzen 29 getragen, die am Mantelrohr festgelegt sind. Zweckmäßig sind diese Lamellen auf die Bolzen 29 nur aufgefädelt, ohne mit ihnen unmittelbar verbunden zu sein. Diese rechteckförmigen Lamellen 18 besitzen ebenfalls ein Langloch 20 und diese Lamellen 18 durchsetzen sandwichartig das erstbesprochene Lamellenpaket 11, wobei sich die Langlochausnehmungen 16 und 20 der beiden Lamellenpakete 11 und 17 kreuzen und so eine Durchtrittsöffnung begrenzen, durch die der Spannbolzen 10 ragt. Unter sandwichartiger Durchsetzung der Lamellen wird hier verstanden, daß innerhalb der sich kreuzenden Lamellenpakete 11 und 17 eine Lamelle des einen Paketes auf eine Lamelle eines andren Paketes folgt, was aus den Fig. 2 und 3 ersichtlich ist. Aus Zwecken der Übersichtlichkeit sind diese sich kreuzenden Lamellen in den beiden Figuren voneinander etwas distanziert dargestellt. In der praktischen Ausführung liegen diese Lamellen unmittelbar aneinander an. Die Lamellen 12 und 18, die die Lamellenpakete 11 und 17 bilden, sind plane, ebene Metallplatten.

Diese sich kreuzenden Lamellenpakete 11 und 17 sind beim gezeigten Ausführungsbeispiel an beiden Schenkeln 3 des Montageteiles 1 jeweils an der Außenseite vorgesehen. Der Spannbolzen 10 ist so lange bemessen, daß er diese beiden Pakete beidseitig überragt. Am einen überragenden Ende ist eine Druckplatte 21 festgelegt, die an der Außenseite der äußersten Lamelle eines Lamellenpaketes anliegt. Am andren überragenden Ende dieses Spannbolzens 10 ist ein Spannglied 22 mit einem Betätigungshebel 23 angeordnet. Dieses Spannglied 22 besteht beispielsweise aus zwei vom Spannbolzen 10 durchsetzten Scheiben 30, 31, von welchen die eine gegenüber der andren mit dem Betätigungshebel 23 verdrehbar ist, beispielsweise über einen Winkelbereich von 40° bis 45°. In der einen Scheibe sind Wälzkörper gelagert, in der andren Scheibe sind zumindest abschnittsweise schraubenflächenförmig verlaufende Abrollbahnen für die Wälzkörper vorgesehen, wobei in der Spannstellung zwischen diesen beiden Scheiben 30, 31 wirksame Arretierungs- oder Rastgliedervorgesehen sind, die den Betätigungshebel 23 in der Spannstellung festhalten. Vergleichbare Konstruktionen für solche Spannglieder sind bekannt.

Die Druckplatte 21 besitzt an ihrer dem Lamellenpaket zugewandten Seite eine mittige Führungsleiste 24, die mit den Rändern der Langlochausnehmung 16 der außen liegenden Lamelle 12 des einen Lamellenpaketes 11 zusammenwirkt und die der Lagesicherung bzw. Verdrehsicherung dieser Druckplatte 21 dient. An ihren Ecken besitzt diese Druckplatte 21 noppenartige Erhebungen 25, die im Zusammenwirken mit den Lamellen diskrete Druckpunkte definieren. Korrespondierend zu diesen noppenartigen Erhebungen 25 an der Druckplatte 21 können an den Lamellen 12 bzw. 18 parallel zu den jeweiligen Langlochausnehmungen leistenartige Erhebungen 26 angeformt sein, so daß bei angezogenem Spannglied 22 die Lamellen 12 und 18 der beiden Lamellenpakete 11 und 17 über konstruktiv definierte, diskrete Druckpunkte aneinander anliegen. Eine derart ausgebildete Lamelle zeigen die Fig. 6 und 7.

Bei normalem Betrieb des Kraftfahrzeuges ist das Spannglied 22 angezogen und aufgrund seiner vorstehend beschriebenen konstruktiven Ausgestaltung in seiner Lage arretiert. Der Spannbolzen 10 preßt dadurch die Lamellen der beiden Lamellenpakete 11 und 17 fest zusammen nach Art einer geschlossenen Lamallenkupplung, wodurch die eingestellte Lage der Lenksäule gesichert ist. Soll das Lenkrad verstellt werden, so betätigt der Fahrer des Kraftfahrzeuges den Betätigungshebel 23, um das Spannglied 22 zu lösen. Dadurch wird die "Lamellenkupplung" geöffnet, und das Mantelrohr 4 kann nun gegenüber dem feststehenden Montageteil 1 in seiner Längsrichtung (Pfeil 27) verschoben werden, und zwar in einem Ausmaß, das der Länge der Langlochausnehmung 20 im Lamellenpaket 17 entspricht. In den Seitenflanken 5 des Mantelrohres 4 befindet sich je eine hier nicht sichtbare Langlochausnehmung, die hinsichtlich Lage und Größe der Langlochausnehmung 20 entspricht, durch welche sich der Spannbolzen 10 erstreckt. Darüberhinaus ist es aber auch möglich, das Mantelrohr 4 mit der darin festgelegten Lenksäule nach oben oder nach unten zu verschwenken (Pfeil 28), wobei das Ausmaß dieser Schwenkbewegung durch die Länge der vertikalen Langlochausnehmungen 16 im Lamellenpaket 11 bestimmt ist. Schwenkpunkt oder Schwenkachse dieser Schwenkbewegung ist das Zentrum des Kardangelenkes 8 am andren Ende der Lenkspindel 6. Hat das Lenkrad die vom Fahrer gewünschte Lage erreicht, so wird der Betätigungshebel 23 wieder in die Spannstellung zurückgeschwenkt, in der über den Spannbolzen 10 die Lamellen der beiden Lamellenpakete fest zusammengedrückt werden.

Die Erfindung ist nicht auf die gezeigte Anzahl der Lamellen der Lamellenpakete beschränkt. Eventuell genügt die Anordnung eines Lamellenpaketes an einer Seite des Montageteiles 1. Zur Festlegung der Enden 19 der Lamellen 18 des einen Lamellenpaketes 17 sind am Mantelrohr 4 Bolzen 29 festgelegt, auf welchen diese Lamellen aufgefädelt sind. Um zu vermeiden, daß die aufgefädelten Lamellen eventuell Geräusche verursachen können, können die von den Bolzen 29 aufgenommenen Enden so gestaltet sein, daß sie unmittelbar aneinander anliegen, denn diese Lamellen 18 besitzen aufgrund ihrer Länge einen hinreichend großen freien Federweg, der die Verspannung mit den Lamellen 12 des andren Lamellenpaketes 11 ermöglicht. Es ist aber auch möglich, zwischen die Enden dieser Lamellen 18 gummiartige Zwischenscheiben oder Hülsen einzulegen.

Der Spannbolzen 10 kann als Dehnschraube ausgebildet sein oder mit einem vorgespannten Federpaket gespannt werden, um eine Änderung der Klemmkraft infolge von Wärmedehnungen und damit verbundenen Längenänderungen soweit wie möglich zu unterbinden.

Beim gezeigten Ausführungsbeispiel kann das Lenkrad sowohl in der Höhe wie auch die Lenksäule in ihrer Länge verstellt werden. Dies wird u.a. dadurch erreicht, daß beide Lamellenpakete 11, 17 Langlochausnehmungen aufweisen, die sich kreuzen. Wenn eines der Lamellenpakete nur Langlochausnehmungen aufweist und das andre Lamellenpaket nur eine einfache Durchstecköffnung für den Spannbolzen, dann kann entweder nur die Lenksäule in ihrer Länge oder aber nur das Lenkrad in der Höhe verstellt werden.

In den vorstehend beschriebenen Langlochausnehmungen, durch welche der Spannbolzen 10 ragt, können Kunststoffeinlagen vorgesehen sein, die den Spannbolzen 10 leichtgängig und geräuscharm führen. Am jeweiligen Ende der Langlochausnehmungen können Anschlagdämpfer vorgesehen werden. Die vorstehend im Zusammenhang mit den Lamellen 12 und 18 beschriebenen leistenartigen Erhöhungen 26, durch welche diskrete Druckpunkte definiert werden, können auch sinngemäß an den Seitenflanken 5 des Mantelrohres 4 und an den damit zusammenwirkenden Seiten der Schenkel 3 des Montageteiles 1 vorgesehen werden. Dank der vorstehend beschriebenen Festlegung des Mantelrohres 4 im Montageteil 1 benötigt die beschriebene Konstruktion keine zusätzliche Abstützung im Bereich des Kardangelenkes 8, da über den Spannbolzen 10 eine hinreichend große Klemmkraft erzeugt werden kann, die das Mantelrohr 4 unverrückbar festhält. Druckplatten 21 werden zweckmäßigerweise an den Außenseiten beider Lamellenpakete vorgesehen. Im gezeigten Ausführungsbeispiel sind zu beiden Seiten der Schenkel 3 des Montageteiles 1 Lamellenpakete angeordnet, die jeweils aus mehreren einzelnen Lamellen bestehen. Die Anzahl der Lamellen richtet sich nach dem jeweiligen Anwendungsfall. Es ist denkbar, daß jedes Lamellenpaket nur aus jeweils einer Lamelle besteht, so daß zu beiden Seiten des Montageteiles je zwei sich kreuzende Lamellen vorgesehen sind.

### Legende

zu den Hinweisziffern:
- 1: Montageteil (Konsole)
- 2: Oberseite
- 3: vertikale Schenkel
- 4: Mantelrohr
- 5: Seitenflanken
- 6: Lenkspindel
- 7: Schaft
- 8: Kardangelenk
- 9: Ende
- 10: Spannbolzen
- 11: Lamellenpaket
- 12: Lamelle
- 13: Seite
- 14: Haltebolzen
- 15: Abschnitt
- 16: Langlochausnehmung
- 17: Lamellenpaket
- 18: Lamelle
- 19: Ende
- 20: Langlochausnehmung
- 21: Druckplatte
- 22: Spannglied
- 23: Betätigungshebel
- 24: Führungsleiste
- 25: noppenartige Erhöhung
- 26: leistenartige Erhebung
- 27: Pfeil
- 28: Pfeil
- 29: Bolzen
- 30: Scheibe
- 31: Scheibe

## Patentansprüche

1. Lenksäule für Kraftfahrzeuge mit einem an einem Karosserieteil festlegbaren Montageteil (1), zwischen dessen Schenkeln (3) ein die Lenkspindel (6) aufnehmendes Mantelrohr (4) liegt, wobei die beiden Seitenflanken (5) des Mantelrohres (4), die plan sind oder zur Ausbildung von diskreten Druckpunkten leistenartige Erhöhungen aufweisen, die mit leistenartigen Erhöhungen an den Innenseiten der Schenkel (3) des Montageteils (1) zusammenwirken, an den Innenseiten der beiden Schenkel (3) des Montageteils (1) anliegen, das Mantelrohr (4) von einem quer zur Achse der Lenkspindel (6) angeordneten Spannbolzen (10) durchsetzt ist, der in den Schenkeln (3) des Montageteiles (1) vorgesehene Ausnehmungen durchsetzt, und an der Außenseite zumindest eines Schenkels (3) des Montageteiles (1) sich gegenseitig überdeckende Lamellen (12, 18) vorgesehen sind, die im Überdeckungsbereich Ausnehmungen (16, 20) aufweisen, die eine Durchtrittsöffnung für den Spannbolzen (10) begrenzen, und der Spannbolzen (10) an seinem einen Ende eine Druckplatte (21) und an seinem anderen Ende ein verstellbares Spannglied (22) trägt, die auf die Lamellen (12, 18) zusammenpressend einwirken, und ein aus mindestens einer, vorzugsweise aus mehreren voneinander distanzierten Lamellen (12) bestehendes Lamellenpaket (11) an der Außenseite zumindest eines Schenkels (3) des Montageteiles (1) festgelegt ist und an der Außenseite des Mantelrohres (4) ein zweites aus mindestens einer Lamelle (18) bestehendes Lamellenpaket (17) festgelegt ist und die Lamellen (12) des am Montageteil (1) angeordneten Lamellenpaketes (11) und die Lamellen (18) des zweiten Lamellenpaketes (17) sich sandwichartig kreuzend durchsetzen, **dadurch gekennzeichnet, daß** in den Lamellen (12, 18) beider Lamellenpakete (11, 17) Langlochausnehmungen (16, 20) vorgesehen sind, wobei die deckungsgleich liegenden Langlochausnehmungen (16) der einen Lamellen (12) die deckungsgleich liegenden Langlochausnehmungen (20) der anderen Lamellen (18) kreuzen, und die vom Spannbolzen (10) durchsetzte Öffnung im Mantelrohr (4) als Langlochausnehmung ausgebildet ist und diese Langlochausnehmung im wesentlichen deckungsgleich liegt mit den Langlochausnehmungen (20) in dem am Mantelrohr (4) festgelegten Lamellenpaket (17) und die in den beiden Schenkeln (3) des Montageteiles (1) vorgesehenen Langlochausnehmungen deckungsgleich liegen mit den Langlochausnehmungen (16) des am Montageteil (1) festgelegten Lamellenpaketes (11), und daß, falls die beiden Seitenflanken (5) des Mantelrohrs (4) und die Innenseiten der Schenkel (3) des Montageteils (1) zusammenwirkende leistenartige Erhöhungen aufweisen, die leistenartigen Erhöhungen der Seitenflanken (5) des Mantelrohrs (4) parallel zu den Längsrändern der Langlochausnehmung im Mantelrohr (4) verlaufen und die leistenartigen Erhöhungen der Innenseiten der Schenkel (3) des Montageteils (1) parallel zu den Längsrändern der Langlochausnehmungen der Schenkel (3) des Montageteils (1) verlaufen und die Lamellen (12, 18) ebenfalls leistenartige Erhöhungen (26) gegenüber den Ebenen der Lamellen (12, 18) aufweisen, die parallel zu den Längsrändern der Langlochausnehmungen der Lamellen (12, 18) verlaufen, und die Druckplatte (21) an ihrer dem Lamellenpaket (11) zugewandten Seite an ihren Ecken noppenartige Erhöhungen (25) aufweist, die bei angezogenem Spannglied (22) örtlich begrenzte Druckstellen bilden, und die leistenartigen Erhöhungen der Seitenflanken (5) des Mantelrohrs (4), der Innenseiten der Schenkel (3) des Montageteils (1) und der Lamellen (12, 18) mit den noppenartigen Erhöhungen (25) der Druckplatte (21) korrespondieren, wobei ihr gegenseitiger Abstand (B) jeweils dem Abstand (C) der noppenartigen Erhöhungen (25) an der Druckplatte (21) entspricht.

2. Lenksäule nach Anspruch 1, **dadurch gekennzeichnet, daß** die die deckungsgleich liegenden Langlochausnehmungen (16) aufweisenden Abschnitte (15) der Lamellen (12) des einen Lamellenpaketes (11) nur einseitig, fliegend gelagert sind, wobei dieses Lamellenpaket (11) an der Außenseite eines Schenkels (3) des Montageteiles (1) festgelegt ist.

3. Lenksäule nach Anspruch 2, **dadurch gekennzeichnet, daß** das die fliegend gelagerten Abschnitte (15) aufweisende Lamellenpaket (11) am Schenkel (3) mit mindestens zwei Haltebolzen (14) festgelegt ist.

4. Lenksäule nach Anspruch 1, **dadurch gekennzeichnet, daß** die Langlochausnehmungen (16) im Lamellenpaket (11), das am Montageteil (1) festgelegt ist, im wesentlichen vertikal verlaufen.

5. Lenksäule nach Anspruch 1, **dadurch gekennzeichnet, daß** die Lamellen (18) des am Mantelrohr (4) festgelegten Lamellenpaketes (17) als langgestreckte Rechtecke ausgebildet sind und diese Lamellen (18) beidseitig an ihren Enden (19) mit dem Mantelrohr (4) verbunden sind.

6. Lenksäule nach Anspruch 1, **dadurch gekennzeichnet, daß** für den Fall, daß die beiden Seitenflanken (5) des Mantelrohrs (4) plan sind, die Druckplatte (21) an ihrer dem Lamellenpaket (11) zugewandten Seite randseitig noppenartige Erhöhungen (25) aufweist, die örtlich begrenzte Druckstellen bilden bei angezogenem Spannglied (22), und daß parallel zu den Längsrändern der Langlochausnehmungen (16, 20) der Lamellen (12, 18) gegenüber den Ebenen der Lamellen leistenartige Erhöhungen (26) vorgesehen sind, wobei der gegenseitige Abstand (B) dieser leistenartigen Erhöhungen (26) dem Abstand (C) der noppenartigen Erhöhungen (25) an der Druckplatte (21) entspricht.

7. Lenksäule nach einem der Ansprüche 1 bis 6, **dadurch gekennzeichnet, daß** an der Außenseite beider Schenkel (3) des Montageteiles (1) vom Spannbolzen (10) durchsetzte Lamellenpakete (11, 17) angeordnet sind.

8. Lenksäule nach Anspruch 1, **dadurch gekennzeichnet, daß** der Spannbolzen (10) als Dehnschraube ausgebildet ist.

9. Lenksäule nach Anspruch 1, **dadurch gekennzeichnet, daß** das Spannglied (22) in an sich bekannter Weise aus zwei vom Spannbolzen (10) durchsetzten Scheiben (30, 31) gebildet ist, von welchen die eine Scheibe (30) verdrehsicher am anliegenden Lamellenpaket festgelegt ist und die andere Scheibe (31) mit einem Betätigungshebel (23) verbunden ist und in wenigstens einer der beiden Scheiben (30, 31) Wälzkörper frei drehbar gelagert sind, die an der Stirnseite der andren Scheibe anliegen und diese Stirnseite wenigstens über einen Teil ihres Umfanges als schraubenartig verlaufende Fläche ausgebildet ist und zwischen den Scheiben (30, 31) eine in der Spannstellung des Spanngliedes (22) wirksame Raste vorgesehen ist.

10. Lenksäule nach Anspruch 1, **dadurch gekennzeichnet, daß** die Schenkel (3) des als Konsole ausgebildeten, im wesentlichen U-förmigen Montageteiles (1) sich sowohl rechtwinkelig zur Oberseite (2) der die Schenkel (3) verbindenden Wange erstrecken wie auch parallel zu dieser Oberseite (2) und der Montageteil (1) sowohl in Draufsicht wie auch in Ansicht (Fig. 2 und 3) eine U-Form besitzt.

11. Lenksäule nach Anspruch 5, **dadurch gekennzeichnet, daß** die Lamellen (18) beidseitig mit ihren Enden (19) auf am Mantelrohr (4) festgelegten Bolzen (29) frei beweglich aufgefädelt sind.

## Claims

1. A steering column for motor vehicles, comprising a mounting part (1) which is fixable to a body part and between the arms (3) of which is arranged a steering-column tube (4) receiving the steering spindle (6), wherein the two flanks (5) of the steering-column tube (4), which are flat or, for the formation of discrete pressure points, have strip-type projections which co-operate with strip-type projections on the insides of the arms (3) of the mounting part (1), rest against the insides of the two arms (3) of the mounting part (1), a clamping bolt (10), arranged transversely to the axis of the steering spindle (6), extends through the steering-column tube (4) and through openings provided in the arms (3) of the mounting part (1), and mutually overlapping plates (12, 18) are provided on the outside of at least one arm (3) of the mounting part (1) and, in the overlap region, have openings (16, 20) delimiting a through hole for the clamping bolt (10), and the clamping bolt (10) carries a pressure plate (21) at one end and an adjustable clamping member (22) at the other end which together have a compressive effect on the plates (12, 18), and a set of plates (11), preferably comprising a plurality of spaced plates (12), is fixed to the outside of at least one arm (3) of the mounting part (1), and a second set of plates (17), comprising at least one plate (18), is fixed to the outside of the steering-column tube (4), and the plates (12) of the set of plates (11) arranged on the mounting part (1) and the plates (18) of the second set of plates (17) cross one another in a sandwich-type manner, **characterised in that** slotted openings (16, 20) are provided in the plates (12, 18) of the two sets of plates (11, 17), the aligned slotted openings (16) in the first plates (12) intersecting the aligned slotted openings (20) in the second plates (18), and the opening in the steering-column tube (4), through which the clamping bolt (10) extends, being formed as a slotted opening and being substantially aligned with the slotted openings (20) in the set of plates (17) fixed to the steering-column tube (4), and the slotted openings provided in the two arms (3) of the mounting part (1) being aligned with the slotted openings (16) in the set of plates (11) fixed to the mounting part (1), and **in that**, if the two flanks (5) of the steering-column tube (4) and the insides of the arms (3) of the mounting part (1) have co-operating strip-type projections, the strip-type projections on the flanks (5) of the steering-column tube (4) extend parallel to the longitudinal edges of the slotted opening in the steering-column tube (4), and the strip-type projections on the insides of the arms (3) of the mounting part (1) extend parallel to the longitudinal edges of the slotted openings in the arms (3) of the mounting part (1), and the plates (12, 18) likewise have strip-type projections (26) which project relative to the planes of the plates (12, 18) and extend parallel to the longitudinal edges of the slotted openings in the plates (12, 18), and the pressure plate (21) has, on its side facing the set of plates (11) and at its corners, protuberance-type projections (25) which form locally limited pressure points when the clamping member (22) is tightened, and the strip-type projections on the flanks (5) of the steering-column tube (4), on the insides of the arms (3) of the mounting part (1) and on the plates (12, 18) correspond to the protuberance-type projections (25) on the pressure plate (21), wherein the distance (B) between them in each case corresponds to the distance (C) between the protuberance-type projections (25) on the pressure plate (21).

2. A steering column according to claim 1, **characterised in that** the portions (15) of the plates (12) of the one set of plates (11) provided with the aligned slotted openings (16) are mounted at one end only, in a cantilevered manner, this set of plates (11) being fixed to the outside of one arm (3) of the mounting part (1).

3. A steering column according to claim 2, **characterised in that** the set of plates (11) having the cantilevered portions (15) is fixed to the arm (3) by at least two retaining pins (14).

4. A steering column according to claim 1, **characterised in that** the slotted openings (16) in the set of plates (11) fixed to the mounting part (1) extend substantially vertically.

5. A steering column according to claim 1, **characterised in that** the plates (18) of the set of plates (17) fixed to the steering-column tube (4) are formed as elongate rectangles and these plates (18) are connected at both ends (19) to the steering-column tube (4).

6. A steering column according to claim 1, **characterised in that**, if the two flanks (5) of the steering-column tube (4) are flat, the pressure plate (21), on its side facing the set of plates (11), has protuberance-type projections (25) forming locally limited pressure points at the edges when the clamping member (22) is tightened, and **in that** strip-type projections (26) are provided parallel to the longitudinal edges of the slotted openings (16, 20) in the plates (12, 18) and project relative to the planes of the plates, the distance (B) between the strip-type projections (26) corresponding to the distance (C) between the protuberance-type projections (25) on the pressure plate (21).

7. A steering column according to any one of claims 1 to 6, **characterised in that** sets of plates (11, 17), through which clamping bolts (10) extend, are arranged on the outside of both arms (3) of the mounting part (1).

8. A steering column according to claim 1, **characterised in that** the clamping bolt (10) is formed as an expansion bolt.

9. A steering column according to claim 1, **characterised in that** the clamping member (22) is formed in a known manner from two discs (30, 31) through which the clamping bolt (10) extends, of which the one disc (30) is fastened to the adjacent set of plates so as to be rotationally fixed, and the other disc (31) is connected to an actuating lever (23), and rolling elements are freely rotatably mounted in at least one of the two discs (30, 31) and rest against the face of the other disc, this face being formed over at least part of its circumference as a helicoidal surface, and a detent, effective in the clamped position of the clamping member (22), is provided between the discs (30, 31).

10. A steering column according to claim 1, **characterised in that** the arms (3) of the substantially U-shaped mounting part (1), formed as a bracket, extend both at right angles to the upper surface (2) of the plate connecting the arms (3) and parallel to this upper surface (2), and the mounting part (1) is U-shaped both in plan view and in elevation (figs. 2 and 3).

11. A steering column according to claim 5, **characterised in that** both ends (19) of the plates (18) are freely movably threaded onto pins (29) fixed to the steering-column tube (4).

## Revendications

1. Colonne de direction pour véhicules à moteur, comprenant une partie de montage (1) qui peut être fixée sur une partie de la carrosserie, entre les ailes (3) de laquelle se trouve un tube de protection (4) recevant un arbre de direction (6), avec deux flancs latéraux (5) du tube (4) planes ou ayant des saillies en forme de barrettes pour former des points de pression discrets, qui coopèrent avec des saillies en forme de barrettes sur les faces internes des ailes (3) de la partie de montage (1), en s'appuyant sur les faces internes des deux ailes (3) de la pièce de montage (1), dans laquelle le tube de protection (4) est traversé par une goupille de serrage (10) transversale à l'axe de l'arbre de direction (6), et qui pénètre dans des cavités prévues dans les ailes (3) de la partie de montage (1), et sur le côté extérieur d'au moins une aile (3) de la partie de montage (1), des lamelles (12, 18) se recouvrant mutuellement présentent dans la zone de recouvrement des cavités (16, 20) qui délimitent une ouverture de passage pour la goupille de serrage (10), et la goupille de serrage (10) porte sur sa première extrémité une plaque de pression (21) et sur son autre extrémité un élément de serrage réglable (22), qui agissent sur les lamelles (12, 18) de manière à les presser l'une sur l'autre, et un paquet de lamelles (11) constitué d'au moins une, de préférence de plusieurs lamelles (12) espacées l'une de l'autre est fixé sur le côté extérieur d'au moins une aile (3) de la partie de montage (1) et un second paquet de lamelles (17) constitué d'au moins une lamelle (18) est fixé sur le côté extérieur du tube de protection (4), et les lamelles (12) du paquet de lamelles (11) agencé sur la partie de montage (1) et les lamelles (18) du second paquet de lamelles (17) s'interpénètrent en sandwich de façon croisée,
**caractérisée en ce que**
dans les lamelles (12, 18) des deux paquets de lamelles (11, 17) on a des cavités allongées (16, 20), les cavités allongées (16) de même extension des premières lamelles (12) croisant les cavités allongées (20) de même extension des autres lamelles (18), et l'ouverture traversée par la goupille de serrage (10) dans le tube de protection (4) se présente sous la forme d'une cavité allongée et cette cavité allongée a sensiblement la même extension que les cavités allongées (20) dans le paquet de lamelles (17) fixé au tube de protection (4) et les cavités allongées prévues dans les deux ailes (3) de la partie de montage (1) ont la même extension que les cavités allongées (16) du paquet de lamelles (11) fixé à la partie de montage (1), et dans le cas où les deux flancs latéraux (5) du tube (4) et les faces internes des ailes (3) de la partie de montage (1) ont des saillies en forme de barrettes qui coopèrent, les saillies des flancs (5) du tube (4) sont parallèles aux bords longitudinaux des cavités allongées dans le tube (4), les saillies des faces internes des ailes (3) de la partie de montage (1) sont parallèles aux bords longitudinaux des cavités allongées des ailes (3) de la partie (1), les lamelles (12, 18), ont des saillies (26) par rapport au plan des lamelles (12, 18), en forme de barrettes parallèles aux bords longitudinaux des cavités allongées des lamelles (12, 18), et la plaque de pression (21) présente au coin de sa face tournée vers le paquet de lamelles (11) des saillies (25) en forme de bouton comme point de pression délimités localement lorsque l'organe de serrage (22) est tiré, alors que les saillies en forme de barrette des flancs (5) du tube (4), des faces internes des ailes (3) et des lamelles (12, 18), correspondant avec les saillies (25) en forme de bouton de la plaque de pression (21), leur distance réciproque (B) correspondant chaque fois à la distance (C) des saillies (25) en forme de bouton sur la plaque de pression (21).

2. Colonne de direction selon la revendication 1,
**caractérisée en ce que**
les sections (15), présentant des cavités allongées (16) de même extension, des lamelles (12) du premier paquet de lamelles (11) sont montées de manière flottante sur un seul côté, ce paquet de lamelles (11) étant fixé sur le côté extérieur d'une aile (3) de la partie de montage (1).

3. Colonne de direction selon la revendication 2,
**caractérisée en ce que**
le paquet de lamelles (11) présentant les sections (15) montées de manière flottante est fixé sur l'aile (3) par au moins deux boulons de retenue (14).

4. Colonne de direction selon la revendication 1,
**caractérisée en ce que**
les cavités allongées (16) du paquet de lamelles (11) fixé à la partie de montage (1), son pratiquement verticales.

5. Colonne de direction selon la revendication 1,
**caractérisée en ce que**
les lamelles (18) du paquet de lamelles (17) fixé au tube de protection (4) se présentent sous la forme de rectangles et ces lamelles (18) sont reliées au tube de protection (4) des deux côtés à leurs extrémités (19).

6. Colonne de direction selon la revendication 1,
**caractérisée en ce que**
dans le cas où les deux flancs latéraux (5) du tube de protection (4) sont planes, la plaque de pression (21) présente sur son côté faisant face au paquet de lamelles (11), sur la périphérie, des saillies (25) en forme de boutons qui forment des points de pression localement délimités lorsque l'élément de serrage (22) est tiré, et **en ce qu'**il est prévu parallèlement aux bords longitudinaux des cavités allongées (16, 20) des lamelles (12,18) des saillies (26) par rapport aux plans des lamelles sont en forme de barrettes, la distance mutuelle (B) de ces saillies (26) en forme de barrettes correspondant à la distance (C) des saillies (25) en forme de boutons sur la plaque de pression (21).

7. Colonne de direction selon l'une quelconque de revendications 1 à 6,
**caractérisée en ce que**
les paquets de lamelles (11, 17) traversés par la goupille de serrage (10) sont agencés sur le côté extérieur des deux ailes (3) de la partie de montage (1).

8. Colonne de direction selon la revendication 1,
**caractérisée en ce que**
la goupille de serrage (10) se présente sous la forme d'une vis à allongement.

9. Colonne de direction selon la revendication 1,
**caractérisée en ce que**
l'élément de serrage (22) est formé de manière connue en soi de deux disques (30, 31) traversés par la goupille de serrage (10), dont le premier disque (30) est fixé de manière à ne pas pouvoir tourner sur le paquet de lamelles contigu et dont l'autre disque (31) est relié à un levier de commande (23) et, dans au moins l'un des deux disques (30, 31) sont montés à rotation libre des corps cylindriques qui s'appliquent sur le côté avant de l'autre disque, et ce côté avant est conformé, au moins sur une partie de sa périphérie, en surface s'étendant en hélice et il est prévu, entre les disques (30, 31), un arrêt agissant dans la position de serrage de l'élément de serrage (22).

10. Colonne de direction selon la revendication 1,
**caractérisée en ce que**
les ailes (3) de la partie de montage (1) conformée en console et sensiblement en forme de U s'étendent autant perpendiculairement à la partie supérieure (2) des joues reliant les ailes (3) que parallèlement à cette partie supérieure (2) et la partie de montage (1) possède une forme en U tant en vue de dessus qu'en vue de face (Fig. 2 et 3).

11. Colonne de direction selon la revendication 5,
**caractérisée en ce que**
les lamelles (18) sont enfilées de manière à pouvoir se déplacer librement des deux côtés par leurs extrémités (19) sur des boulons (29) fixés au tube de protection (4).
